Europäisches Patentamt

European Patent Office

Office européen des brevets

(11) Publication number: **0 209 504**
**A2**

# EUROPEAN PATENT APPLICATION

(21) Application number: 86850229.5

(22) Date of filing: 18.06.86

(51) Int. Cl.⁴: **C08F 14/06 , C08F 2/18**

(30) Priority: 17.07.85 SE 8503507

(43) Date of publication of application:
21.01.87 Bulletin 87/04

(84) Designated Contracting States:
AT BE CH DE FR GB IT LI NL SE

(71) Applicant: Kenobel AB
Box 11536
S-100 61 Stockholm(SE)

(72) Inventor: Nilsson, Holger
Eglis Gränd 6
S-223 75 Lund(SE)
Inventor: Silvegren, Christer
Illongränden 364
S-223 71 Lund(SE)

(74) Representative: Schöld, Zald
c/o Nobel Industries Sweden Patent
Department P.O. Box 11065
S-100 61 Stockholm(SE)

(54) A process for the polymerisation of vinyl chloride.

(57) A process for the polymerisation of vinyl chloride in aqueous system using a monomer-soluble, free-radical forming initiator. The initiator is activated at the first stage of the polymerisation partly be means of a red-ox system comprising a metal complex which is reduced to initiator-activating form by means of a reducing substance. The total amount of reducing substance is added at the beginning of the polymerisation process and this leads to a rapid increase to a constant polymerisation rate. The initiator is eg a diacyl peroxide or a peroxy dicarbonate and the radical formation from the initiator during the later part of the polymerisation is entirely dependent on the thermal decomposition of the initiator.

## A process for the polymerisation of vinyl chloride

The present invention relates to a process for polymerisation of vinyl chloride, or vinyl chloride and copolymerisable monomers, in aqueous suspension using a monomer-soluble, free-radical forming initiator for which the radical formation occurs partly by thermal decomposition and partly by chemical activation. The invention more particularly relates to such a process wherein the initiator is activated by means of reduction of a water soluble metal complex which is transferred to reduced, initiator-activating form by addition of a reducing substance whereby the whole amount of reducing substance is charged at the beginning of the polymerisation reaction.

Vinyl chloride homo-and copolymers are produced by suspension polymerisation or microsuspension polymerisation in water using monomer-soluble, free-radical forming initiators. In the case of suspension polymerisation a suspension agent is employed, normally a protective colloid. In the case of microsuspension polymerisation a surface active agent, an emulsifier and/or a suspension agent, is employed. The most commonly used initiators are peroxides or peroxy compounds belonging to the groups aromatic and aliphatic diacylperoxides, diaralkylperoxides, hydroperoxides, peresters, peroxidicarbonates and of these certain diacylperoxides and peroxidicarbonates, which are not thermally decomposed too rapidly, are preferably used.

The process at conventional vinyl chloride polymerisation, wherein the effect of the initiator is entirely dependent on the thermal decomposition, is such that the reaction rate increases continuously until the separate monomer phase is exhausted and there is then a short but marked rate maximum, the so-called max-effect, at the final stage of the polymerisation when most of the monomer has been converted to polymer. This type of process does not give a safe operation and the reactor cannot be used in an optimum manner, as a rule there must be means available for emergency cooling and inhibitor systems must be available. The initiator must further be carefully dosed with regard to the cooling capacity of the reactor as the cooling capacity would be exceeded at an overdosage. It is desirable that this type of polymerisation process can be controlled so that the polymerisation rate will be as constant as possible, to increase the production and to reduce the cycle time in a given reactor. It is also desirable to provide for the constant polymerisation rate to be reached as rapidly as possible and it is further desirable that the process can be carried out without requirements on equipment for dosage in addition to that normally used for vinyl chloride polymerisation reactors and that the process can be carried out without introducing unstable initiators which would lead to problems with handling, risk of explosions etc.

It is per se known to influence the reaction kinetics at suspension polymerisation of vinyl chloride, to prevent the above described autoacceleration and increase the total polymerisation rate by activating the initiator, which has a thermal decomposition, by means of a red-ox system. Polymerisation processes of this kind are described in the East German patent 152347 and in the European patent application 0094160.

The East German patent discloses a polymerisation process wherein diacylperoxides and/or peroxidicarbonates are used as initiators and are activated by use of an oil-and/or watersoluble metal compound and a reducing agent. It is mentioned that the metal compound is added before the polymerisation or during this and that the reducing agent is added intermittently or progressively during the polymerisation. In the examples, according to which dilauroyl peroxide and/or dicetyl peroxidicarbonate are used as initiators, the reducing agent has been added continuously during the polymerisation at a determined dosage.

The European patent application 0094169 also discloses a polymerisation process in which the initiator is progressively activated during the polymerisation by reduction of a water soluble metal complex to a form in which it activates the initiator. The conversion to activating form is carried out by the intermittent or continuous addition of a reducing agent. According to the application diacyl peroxides or moderately active peroxidicarbonates are preferably used as initiators and the examples show activation of lauroylperoxide by continuous addition of reducing agent during the entire polymerisation process to a system containing different metal complexes, such as complexes of copper and dimethylglyoxime and of cobalt and bipyridyl.

The above described two processes certainly give a shorter total polymerisation time, but from certain other aspects they are not entirely satisfactory. Both processes employ a combination of radical formation from the initiator through the red-ox system and through the thermal decomposition of the initiator. As the reducing substance is added progressively during the polymerisation process extra dosage equipment is required and the progressive activation of the initiator means that the initiator must be carefully dosed as the safety margins with regard to the cooling capacity of the reactor otherwise will be very small and there will be a risk that they are exceeded.

For vinyl chloride polymerisation with initiators of the type dilauroyl peroxide and dicetyl peroxidicarbonate, which give a fairly slow polymerisation initiation but which are efficient during a longer period of time, it has been suggested to use a co-initiator. These co-initiators, which generally have an asymmetrical configuration, have low thermal stability and thus give a rapid initiation of the polymerisation in a short time. A polymerisation process of this kind is eg disclosed in the European patent application 0024471. One disadvantage of the co-initiator process is of course that the advantages which are gained with regard to handling and safety when using stable initiators such as lauroyl peroxide and dicetyl peroxidicarbonate are lost by the presence of the co-initiators which have low stability and which demand more complicated handling and dosage processes.

The present invention offers a process for the polymerisation of vinyl chloride in aqueous suspension or microsuspension according to which the initiator is partly activated by means of a red-ox system in the initial stage of the polymerisation, which means that the constant poly merisation rate is reached quickly, and which process has good reaction kinetics. The process of the invention can be considered as an alternative to the co-initiator systems of the type described above with one initiator which has a more rapid thermal decomposition and one which decomposes more slowly. According to the invention the radical formation is activated at the beginning of the polymerisation and no progressive addition of the reducing substance is made. The process does not introduce unstable initiators and neither are there any requirements on extra equipment for dosage in addition to what is conventionally used. The batchwise process of the invention gives an improved utilization of the cooling capacity of the reactor also at the beginning of the polymerisation process. The process further makes it possible to combine initiator systems for use at low polymerisation temperatures and hereby obtain higher safety and a greater freedom in the selection of per-compound than is the case when only the thermal decomposition of the initiator is used.

The present invention thus relates to a process for the polymerisation of vinyl chloride, or vinyl chloride and copolymerisable monomers, in aqueous suspension or microsuspension using a monomer-soluble, free-radical forming per-compound as initiator, in which process the initiator is initially activated by means of reduction of a water soluble metal complex which is converted to reduced, initiator-activating form by initial addition of the total amount of reducing agent.

The initiators used at the polymerisation according to the present process are per-compounds, such as peroxides and peroxi compounds, eg aromatic and aliphatic diacyl peroxides, diaralkylperoxides, hydroperoxides, peresters and peroxidicarbonates. Per-compounds having a thermal decomposition corresponding to a half life which does not exceed 30 hours, at the used polymerisation temperature, are suitably used and the half life should suitably not exceed 10 hours at the polymerisation temperature. The process of the invention will of course give the greatest advantages with regard to both polymerisation kinetics and safety with moderately active initiators, such as eg dilauroyl peroxide and dicetyl peroxydicarbonate which have half lives of 29 and 2.9 hours respectively, at 55°C. It is particularly preferred to use initiators which are solid at room temperature in the process, as these give the safest systems with regard to handling, and hereby particularly solid diacylperoxides and dialkyl peroxidicarbonates such as dilauroyl peroxide, dimyristyl-, dicetyl-, distearyl-, dicyclohexyl-and di-4.tert.-butylcyclohexyl-peroxidicarbonates. The initial red-ox reaction for activation of the initiator shall have exercised the major part of its effect during the beginning of the polymerisation and have such a decay rate that the contribution from this, in relation to the thermal decomposition of the initiator, is negligible when the polymerisation rate has reached its maximum. A system according to the invention gives a constant polymerisation rate very rapidly and in a safe manner. In order that this constant rate should be as high as possible it is required that a higher amount of initiator is charged, compared with the normal case, as otherwise too much initiator will be consumed already in the initial stage. According to a preferred embodiment of the present invention an excess of initiator is thus used in a process with initial red-ox activation. Normally the initiator is used in amounts of from 0.02 to 0.2% based on the monomer and is adjusted within this interval with regard to among other things the polymerisation temperature and the polymerisation recipe. The excess in the present process should be at least 0.1 per cent by weight, based on the normally required amount, and at the most 200 per cent by weight. Suitably an excess within the range of from 1 to 100 per cent by weight is used.

The process of the invention is used for homopolymerisation of vinyl chloride or for copolymerisation of vinyl chloride and monomers copolymerisable therewith. At copolymerisation the amount of vinyl chloride should dominate and suitably not more than 20 per cent by weight of copolymerisable monomers, such as alkenes, vinyl acetate, vinylidene chloride, acrylic acid, methacrylic acid, acryl ates and methacrylates, acrylonitrile and methacrylonitrile, vinyl esters etc, are used.

The polymerisation is carried out by known suspension and microsuspension methods. In the case of suspension polymerisation, which is preferred, conventional suspension agents/protective colloids are used and used in conventional amounts, for example polyvinyl acetate, which may be partially hydrolysed, polyvinylpyrrolidone, polyacrylic acid, acrylic acid copolymers, water soluble cellulose derivatives such as hydroxyethyl and hydroxypropyl cellulose, methyl cellulose and carboxymethyl cellulose, gelatin, starch etc. In the case of microsuspension polymerisation, for these methods known emulsifiers and/or suspension agents are used. Anionic emulsifiers such as alkylarylsulphonates can for example be used and as suspension agents cellulose derivatives and partially hydrolysed polyvinyl acetate can for example be used.

The initial radical formation in the process is obtained from chemical activation. The system for activation comprises in a known manner a complex of a metal in a higher oxidation state which complex is water soluble and can be converted to a complex with the metal in a lower oxidation state which complex is soluble in the monomer phase.

The non-activating metal complex is added to, or allowed to be formed in, the polymerisation system from the beginning. When the complex is of the type which is regenerated, ie brought back to its oxidated form at the activation of the initiator, the amount of complex can be kept very low, at a true catalytic level.

The total amount of reducing agent, for activation of the initiator by forming of complex in a lower oxidation state, and metal or metal complex is added in the initial stage of the polymerisation, before the addition of the initiator, together with this or after the addition of this. The reducing agent is preferably added after the addition of the initiator.

The two forms of the metal complex, which can be a metal salt and/or metal chelate, shall be as selectively soluble in the aqueous phase and the monomer phase respect ively as possible and the reduction of the metal in the aqueous phase must not generate radicals. Different metals which can be subjected to a one-or two-electron reduction, preferably a one-electron reduction, such as eg copper, cobalt, nickel, zinc, tin etc can be utilized. The metal can be added to the system in the form of its oxidated, non-initiator-activating, complex or in the form of a water soluble salt, eg acetate, sulphate etc, to which is then added the complex forming substance.

In practice it has been found that copper, which is reduced from a two-oxidation state to a one-oxidation state, is clearly to prefer in order to get a sufficient transfer of the complexes between the phases. At the reduction of the metal in the aqueous phase the formed reduced metal must immediately be bound sufficiently strongly to prevent disproportioning and precipitation of the metal at low pH values, of metal hydroxide at higher pH values, and thus precipitation of dimetal oxide. In its reduced stage the metal must be transferred to the organic phase.

The complex forming substance can be a chelating agent of the typed described in the European patent application 0094160. For inital addition of metal, complexing agent and reducing substance to be possible the complexing agent must have a certain delaying effect on the reaction of the reducing agent with the metal and particularly suitable complexing agents for use in the present process are 2,2-bipyridyl, or derivatives thereof, and nitrilotriacetic acid. Nitrilotriacetic acid is used in combination with a suitable phase transition substance, such as a fatty acid, a substituted fatty acid or an alkylphosphoric acid. The fatty acid rest in the fatty acid and the alkyl part in the phosphoric acid should both suitably contain at least 6 carbon atoms. As some examples of suitable phase transition substances can be mentioned alfabromolauric acid and diethylhexylphosphoric acid. In relation to the nitrilotriacetic acid the phase transition substance can be used in widely varying amounts. The molar ratio of phase transition substance to nitrilotriacetic acid is suitably within the range of from 250:1 to 1:1, preferably within the range of from 200:1 to 1:1.The complexing agent is selected among other things with regard to the protective colloid system used in the polymerisation recipe and a complex of metal and fatty acid can, for example, not be used without problems in systems with polyvinyl alcohol.

The reduction of the metal complex to the reduced, initiator activating form is carried out by addition of a reducing substance. The reducing substance can for example be hydrazine, hydrazine deravative or ascorbic acid, and of these ascorbic acid is preferred with regard to the working environment. It is of course understood that the ascorbic acid can be added as a salt, eg as ammonium salt, in order not to unneccesarily influence the pH of the polymerisation system.

Through the metal reduction the reducing substance leads to formation of free radicals from the initiator and during the first stage of the polymerisation a large part of the free radicals will come from this reaction, while the contribution of free radicals from chemical activation shall be negligible at the second part of the polymerisation, when an essentially constant polymerisation rate has been reached, and the radicals should then essentially come from the thermal decomposition of the initiator. The period for chemical activation is selected with regard to the conditions for each system with regard to cooling capacity etc. The rate is controlled by the amount of metal in combination with the complexing system and the length of the period is controlled by means of the reducing substance. In contrast to systems using co-initiators, where different such co-initiators are required for each desired effect, the chemical activation according to the invention can be adjusted steplessly and for example be given what corresponds to a fix half-life at a certain temperature.

The mole ratio of metal in the non-activating metal complex to initiator should be within the range of from 1:1000 to 1:2, suitably within the range of from 1:500 to 1:10 an preferably within the range of from 1:500 to 1:15. The total amount of reducing substance which is added initially should with regard to the red-ox reaction corre spond to from 0.1 to 67 per cent of the totally charged initiator and suitably to from 1 to 50 per cent of this.

The invention is further illustrated in the following examples which, however, are not intended to limit the same. Parts and per cent relate to parts by weight and per cent by weight respectively, unless otherwise stated.

Example 1

Vinyl chloride was polymerised according to a suspension process in a 15 l autoclave equipped with means for measuring the polymerisation effect. Two polymerisations were carried out, 1a) and 1b), and of these 1a) was carried out with initial activation according to the invention and 1b) was a conventional polymerisation, for comparison, without chemical activation. The polymerisation recipes and processes are evident from what is stated below.

Polymerisation 1a)

1. 6000 g of deionized water were charged at 40°C.

2. 7 g of polyvinyl alcohol dissolved in 200 g of water were added together with 7.0 g of dicetyl peroxidicarbonate.

3. 57 mg of copper(II)-acetate, in the form of an aqueous solution with 0.365 g/l, and 36.5 mg of 2,2'-bipyridyl, in the form of an aqueous solution with 0.57 g/l, were then added.

4. The system was stirred for 10 minutes and then evacuated for 15 minutes at 40°C.

5. 5600 g of vinyl chloride were added and the system heated to 55°C.

6. 0.6 g of ascorbic acid dissolved in 25 g of water were added.

7. 400 g of water were added after 1 hour and subsequently each hour.

Polymerisation 1b

1. 6000 g deionized water were charged at 40°C.

2. 7 g of polyvinyl alcohol dissolved in 200 g of water were added together with 3.5 g of dicetyl peroxydicarbonate.

3.-

4. The sytem was stirred for 10 minutes and then evacuated for 15 minutes at 40°C.

5. 5600 g of vinyl chloride were added and the system heated to 55°C.

6.-

7. 400 g of water were added after 1 hour and subsequently each hour.

For polymerisation 1a) according to the invention a constant power generation was measured and the pressure drop occurred after 4 hours. For the conventional polymerisation 1b) there was a progressively increasing power generation and the pressure drop occurred after a little more than 5 hours.

Example 2

Two suspension polymerisations of vinyl chloride were carried out at 55°C. Polymerisation 2a) was a conventional polymerisation and 2b) a polymerisation according to the invention. Recipes and processes are shown below.

|                                         | 2a) | 2b)  |
|-----------------------------------------|-----|------|
| $H_2O$ (g)                              | 60  | 60   |
| Polyvinyl alcohol 1 (g)                 | 0.05| 0.04 |
| Polyvinyl alcohol 2 1% (g)              | 6.0 | 6.0  |
| Vinyl chloride (mL)                     | 30  | 30   |
| Dicetyl peroxi dicarbonate              | 25  | 42   |
| Cu(II)(bipyridyl) (ac)(µmol)            | –   | 1.8  |
| Ammonium ascorbate 50mM (g)             | –   | 0.36 |

Water, protective colloid and, for polymerisation 2b) copper catalyst, were charged and the system was then evacuated. The initiator was dissolved in vinyl chloride at room temperature and this solution was then charged. When the system had reached the polymerisation temperature the ascorbate solution, free from oxygen, was then added for polymerisation 2b).

The polymerisation rate and the pressure development for polymerisations 2a) and 2b) are shown in Figure I and II respectively.

Example 3

Vinyl chloride was polymerised in aqueous suspension at 55°C. The actual polymerisation was carried out as in Example 2b) but using a combination of nitrilotriacetic acid and a phase transition substance, alfabromolauric acid, as the metal complex. The polymerisation recipe was as follows:

$H_2O$ 70 g

Methocel (1%) 3 g

Alfabromolauric acid 38 mg

Nitrilotriacetic acid (1mM) 1 g

Cu (II) 1 mM 0.8 g

(added as sulphate)

Dicetylperoxydicarbonate 73 g

Vinyl chloride 50 ml

Ammoniumascorbate 35 µmol

Ammonia and acetic acid added to pH 7.

An almost constant power generation was reached from start and retained during the entire polymerisation.

In a similar polymerisation test a combination of nitrilotriacetic acid and diethylhexylphosphoric acid was used. This system was used in a polymerisation recipe with polyvinyl alcohol and also in this case an increase in power generation at the beginning was obtained in comparison with a conventional polymerisation process.

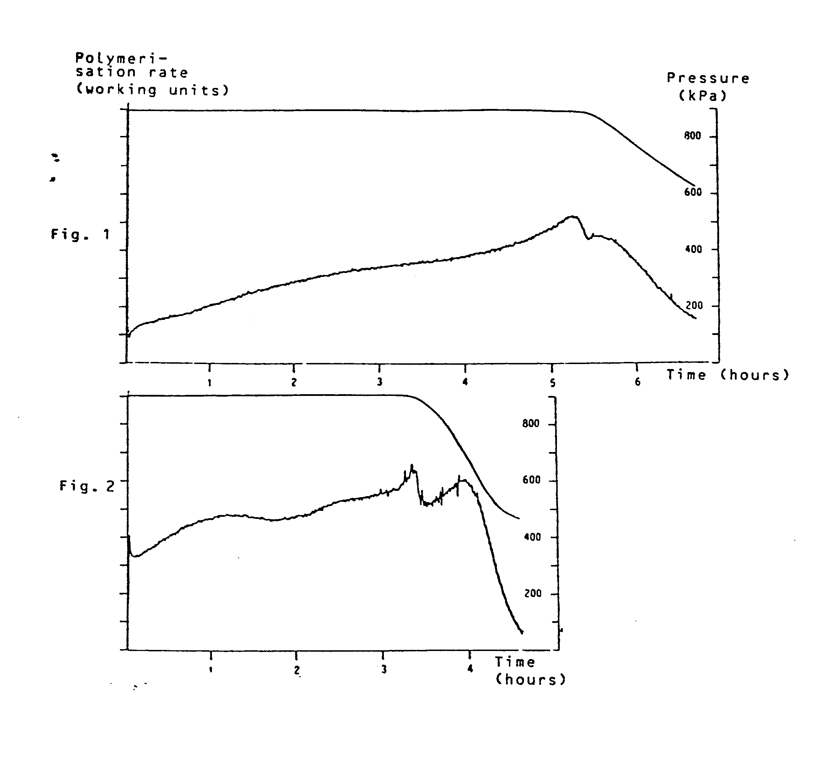

**Claims**

1. A process for the polymerisation of vinyl chloride, or vinyl chloride and copolymerisable monomers, in aqueous suspension or microsuspension, using a monomer-soluble, free-radical forming per-compound as initiator, characterized in that the initiator is initially activated by reduction of a water soluble metal complex which is converted to reduced, initiator-activating form by initial addition of the total amount of reducing substance.

2. A process according to claim 1, characterized in that the initiator has a thermal stability corresponding to a half life of not more than 30 hours at the polymerisation temperature in question.

3. A process according to claim 2, characterized in that the initiator is a diacyl peroxide or a dialkylperoxy dicarbonate.

4. A process according to claim 1, characterized in that the initiator is used in an excess of from 1 to 100 per cent.

5. A process according to claim 1, characterized in that the reducing substance is ascorbic acid.

6. A process according to claim 1, characterized in that the metal complex is a complex of 2,2'-bipyridyl, or a derivative thereof, or of nitrilotriacetic acid in combination with a phase transition substance.

7. A method according to claim 1 or 6, characterized in that the metal in the complex is copper.

8. A method according to any of the preceding claims, characterized in that the polymerisation is carried out in aqueous suspension.

Polymeri-
sation rate
(working units)

Pressure
(kPa)

Fig. 1

800

600

400

200

Time (hours)

1    2    3    4    5    6

Fig. 2

800

600

400

200

Time
(hours)

1    2    3    4